# EUROPEAN PATENT SPECIFICATION

(11) **EP 1 927 491 B1**
(45) Date of publication and mention of the grant of the patent: **13.01.2010**
(21) Application number: 07380314.0
(22) Date of filing: 12.11.2007
(51) Int. Cl.: B60H 1/34

(54) **Air diffuser for automotive vehicle interiors**
Luftdiffusor für Kraftfahrzeuginnenräume
Diffuseur d'air pour intérieurs de véhicule automobile

(30) Priority: 30.11.2006 ES 200602601 U
(43) Date of publication of application: 04.06.2008
(73) Proprietor: Seat, S.A., 08760 Martorell, Barcelona (ES)
(72) Inventor: Sanchez Rubio, Sergio c/o Seat, S.A., 08760 Martorell Barcelona (ES); Romero Alcocer, Alberto c/o Seat, S.A., 08760 Martorell Barcelona (ES); Lanero Caja, Jorge c/o Seat, S.A., 08760 Martorell Barcelona (ES)
(74) Representative: Carvajal y Urquijo, Isabel

(56) References cited:
- EP-A- 0 810 112
- EP-A- 1 279 532
- DE-B3-102004 013 171
- FR-A- 2 534 195
- FR-A- 2 827 815
- GB-A- 2 100 418

## Description

### Field of the Invention

The present invention relates to an air diffuser for automotive vehicle interiors, especially intended for being assembled in a vehicle dashboard, and of the type formed by a circular frame in which two slats that can be positioned between a coplanar closed position and a parallel open position.

### Background of the Invention

Traditional diffusers of the type set forth have two straight sections or secants in each of the sides of the frame for the assembly of the slats for the purpose of preventing the collision thereof during the open process.

Diffusers are also known in which the frame has a completely circular inner contour, but then the slats are fixed and do not rotate.

Finally, diffusers are also known with a circular frame, the slats of which can rotate, but they need an increased allowance or clearance between the slats and the frame so that they can swing between the closed and open positions without interfering with one another. This increased clearance is considerable and is visible with the naked eye, causing an unaesthetic effect.

The problem is due to the swinging of the slats between closed and open positions when such slats collide with the frame when the inner contour thereof is completely circular and the allowance or clearance between slats and frame is reduced.

EP 0810112 discloses a diffuser upon which the appending claim 1 is based.

### Description of the Invention

The object of the present invention is to provide an air diffuser of the type set forth having a completely circular inner contour and in which the allowance or clearance existing between said frame and the edges of the slats, as well as the distance between both slats also, is maximally reduced to obtain an assembly with a clearer frontal view of the diffuser assembly.

To that end and according to the invention, the two slats of the diffuser have complementary curved opposite inner edges, one having a concave curved outline and the other having a convex curved outline, the concave curved edge having a step in which the convex curved edge of the other slat is coupled when both slats are in the coplanar closed position.

The two slats are hinged to the frame according to respective parallel axes that are located at different distances from the front plane of the frame. These axes are formed in each slat by a pair of pivots projecting from the circular outer edge in opposing symmetrical points. In the slat having the convex curved inner edge, the pivots are located in coincidence with the edges defined by inner and outer edges of the slat, these pivots further being tangent to the rear surface of said slat. For its part, in the slat having a concave curved inner edge, the pivots are located at intermediate points of the circular outer edge and are further separated from the rear surface of the slat, the pivots being supported by two posts projecting from said rear surface of the slat.

With the discussed set-up, the hinge axis of the slat with a concave curved inner edge is located at a greater distance from the front plane of the frame than the hinge axis of the other slat.

The two slats of the diffuser are furthermore linked in the rear by means of a connecting rod assembled between lugs projecting from the rear of the slats. This connecting rod consists of a rigid bar hinged to the mentioned lugs of the slats by means of respective axes parallel to the hinge axes of the slats with the circular frame.

The section of the two pivots defining the hinge axis of the slat with a concave curved inner edge opposite to the adjacent vertex of the other slat is arched, the concave curved profile being aimed towards said vertex, so that no interference occurs during the slat opening and closing operations.

The air diffuser could also have three slats, each having its corresponding axis of rotation likewise defined by pivots.

The axes of one of the end slats and of the intermediate slat would be arranged following the arrangement of the previously described slat with a convex curved inner edge, i.e. in coincidence with the vertexes formed by the two curved edges limiting the slat, whereas the axis of the third slat would be located so as to meet the requirements of the previously described slat with a concave curved inner edge, i.e. it would be in an intermediate position of the convex curved outer edge, in symmetrical positions and shifted backwards in relation to the rear surface of said slat.

With the diffuser of the invention the slats are opened and positioned by simply pushing the center of the slat with a convex curved inner edge, without having to make hardly any effort at all.

The main advantages derived from the diffuser of the invention are the possibility of not aligning the slats with the frame of the diffuser to eliminate the front allowance or clearance and thereby obtain a completely circular shape of the diffuser assembly.

### Brief Description of the Drawings

The set-up and features of the diffuser of the invention will be better understood with the following description made in reference to the attached drawings which show a non-limiting embodiment thereof.

In the drawings:
Figure 1 shows a front perspective view of a diffuser with two slats that can be positioned, set up according to the invention.
Figure 2 shows a rear perspective view of the diffuser of Figure 1.
Figure 3 shows a schematic diametrical sectional view of the diffuser with the slats closed and taken along section line III-III of Figure 2.
Figure 4 shows a rear elevational view of the diffuser with the slats open.
Figure 5 shows a side elevational view of the diffuser with the slats open according to direction A of Figure 4.
Figure 6 shows detail B of Figure 4 on a larger scale.
Figure 7 shows detail C of Figure 4 on a larger scale.

### Detailed Description of an Embodiment

The diffuser shown in the drawings comprises a frame 1 having circular inner and outer contours, which can be located in a vehicle instrument panel for example, and in which two slats that can be positioned are assembled, having reference numbers 2 and 3. These slats have a circular outer contour, with a radius approximately coinciding with the inner radius of the frame 1, whereas they internally have complementary opposite edges, the one of slat 2 having a convex curved outline, having reference number 4, and the one of slat having a concave curved outline, having reference number 5.

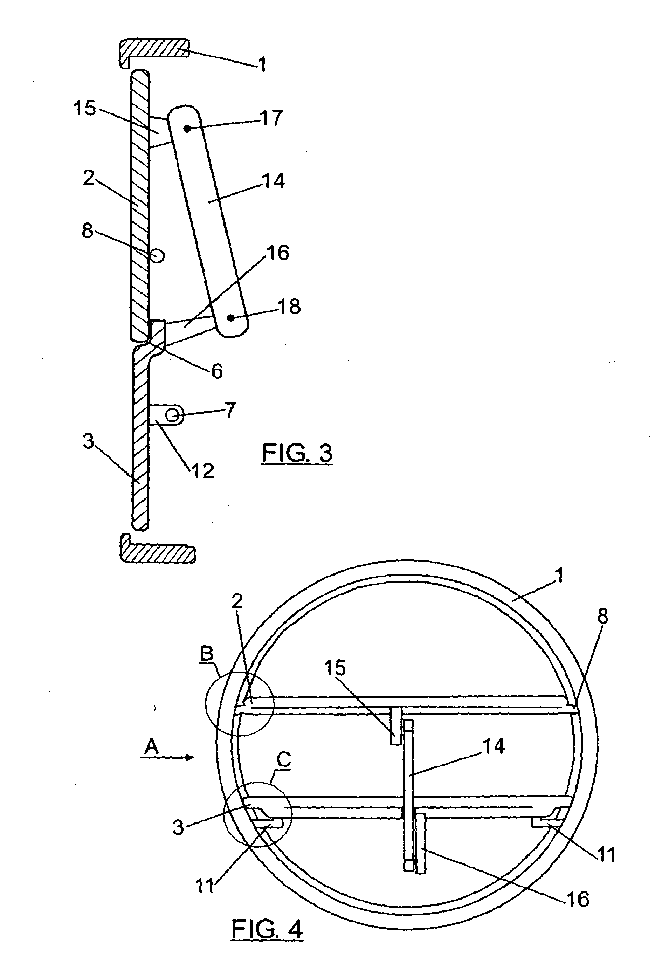

As can be seen in Figure 3, the concave curved edge 5 of slat 3 has a step 6 in which the opposite edge of slat 2 will fit when the two slats are in the closed coplanar position.

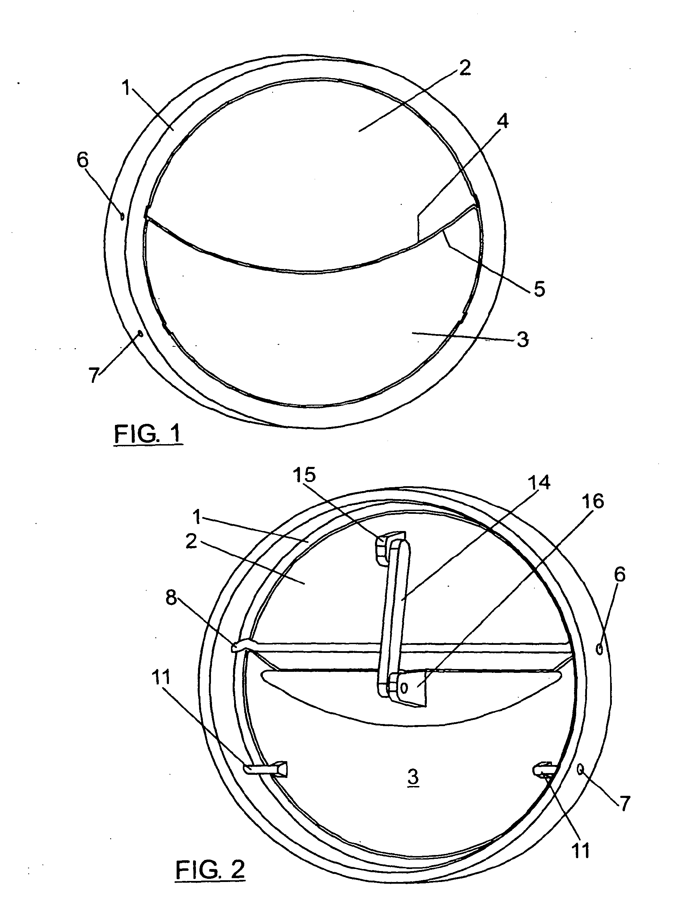

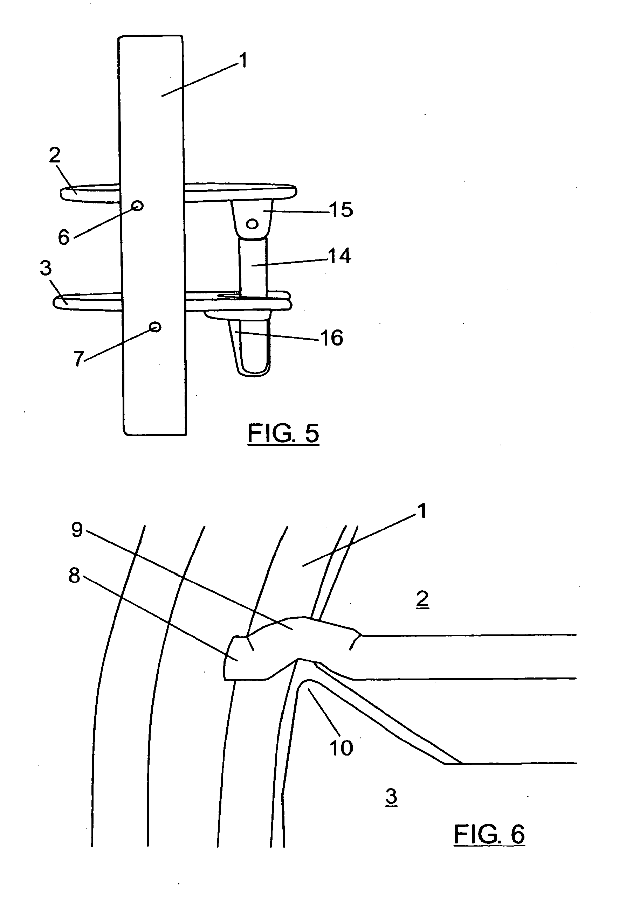

Slats 2 and 3 are hinged to the frame 1 by means of respective parallel axes 6 and 7. Axis 6 of upper slat 2 is defined by two pivots 8, Figures 2, 4 and 6, projecting in opposition from the edge of slat 2, in coincidence with the vertex defined by the convex curved edges limiting this slat. As can best be seen in Figure 6, the pivots 8 have a curved intermediate section having reference number 9 which is opposite to the vertex 10 of slat 3 with the concave curved profile aimed towards said vertex to prevent the corner 10 of slat 3 from colliding with pivot 8 in the slat opening process.

As can be seen in Figure 6, the pivots 8 are tangent to the rear surface of the upper slat 2.

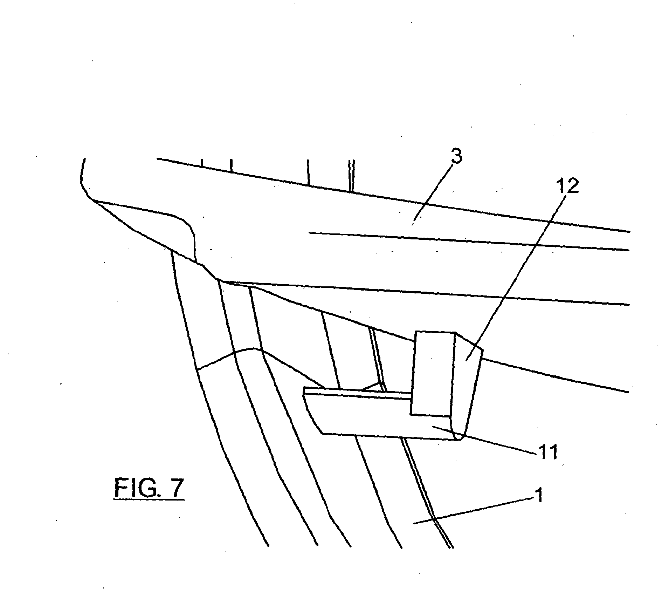

Axis 7 of the lower slat 3 is also defined by two pivots 11 projecting in opposition from the convex curved outer edge of said slat. As can best be seen in Figures 6 and 7, these pivots are separated from the rear surface of slat 3 and are supported by two posts 12 projecting from the rear surface of slat 3.

With this set-up, as can be seen in Figure 5 hinge axis 7 of the lower slat 3 is located at a greater distance from the front surface of frame 1 than hinge axis 6 of the lower slat 2 is.

Finally, the two slats 2 and 3 are linked in the back by means of a connecting rod 14 hinged to lugs 15 and 16 projecting from the rear surface of the two slats, as can be seen in Figures 3 and 5. Connecting rod 14 can be formed by a rigid bar and hinge axes 17 and 18 for hinging said connecting rod to lugs 15 and 16 are parallel to hinge axes 6 and 7 for hinging the slats to frame 1.

Figure 3 shows how the allowance or clearance between slats and frame 1 virtually disappears in the closed slat position, maintaining the circular inner and outer contour of said frame.

Since hinge axis 7 of the lower slat 3 is moved backwards, the collision thereof against the frame during opening is prevented.

As previously mentioned, the diffuser could also include three slats, each with its corresponding axis. The arrangement of the axis of one of the end slats and the intermediate slat would correspond to that of slat 2 described in reference to the attached drawings, whereas the axis of the other slat would correspond with that of slat 3.

Frame 1 can have a profile such as the one shown in Figure 3, whereby the hinge axes of the two slats are concealed and the distance between the slats and the inner edge of the frame can furthermore be reduced.

## Claims

1. An air diffuser for automotive vehicles, comprising a circular frame (1) in which at least two slats (2,3) that can be positioned between a coplanar closed position and a parallel open position are arranged, whereas the two slats that can be positioned have complementary curved opposite inner edges, one having a convex curved outline (4) and the other having a concave curved outline (5), and they are hinged to the frame according to respective parallel axes (6,7) formed in each slat (2,3) by a pair of pivots (8) projecting from the circular outer edge in opposing symmetrical points, said pivots being located in the slat (2) having a convex curved inner edge in coincidence with the vertexes defined by said inner edge and by the circular outer edge and tangent to the rear surface of the slat (2), whereas in the slat (3) having a concave curved inner edge, the pivots are located at intermediate points of the circular outer edge and are separated from the rear surface of the slat, supported by two posts (12) projecting from said rear surface of the slat, (3) such that the hinge axis (7) of the slat (3) having a concave curved inner edge is located at a greater distance from the front plane of the frame than the hinge axis (6) of the other slat (2) is; and in that the two slats are linked in the rear by means of a connecting rod (14) assembled between assembled lugs (15,16) projecting from the rear of the two slats (2,3)

2. A diffuser according to claim 1, **characterized in that** the two pivots defining the hinge axis of the slat having a concave curved inner edge have the section opposite to the adjacent vertex of the other slat arched, the concave curved profile being aimed towards said vertex.

3. A diffuser according to claim 1, **characterized in that** the concave curved inner edge of the corresponding slat has a step in which the convex curved inner edge of the other slat is coupled in the coplanar closed position of the two slats.

4. A diffuser according to claim 1, **characterized in that** the connecting rod linking the two slats in the rear consists of a rigid bar hinged to the lugs of the slats by means of respective axes parallel to the hinge axes of the slats with the circular frame.

## Patentansprüche

1. Luftverteiler für Kraftfahrzeuge, der einen kreisförmigen Rahmen (1) umfasst, in dem wenigstens zwei Lamellen (2, 3) angeordnet sind, die zwischen einer koplanaren geschlossenen Stellung und einer parallelen offenen Stellung ausgerichtet werden können, wobei die zwei Lamellen, die ausgerichtet werden können, komplementär gekrümmte gegenüberliegende Innenkanten haben, wobei die eine einen konvexen gekrümmten Umriss (4) hat und die andere einen konkaven gekrümmten Umriss (5) hat und sie gelenkig mit dem Rahmen verbunden sind, entsprechend jeweiligen parallelen Achsen (6, 7), die in jeder Lamelle (2, 3) durch ein Paar von Achszapfen (8) gebildet werden, die in gegenüberliegenden symmetrischen Punkten von der kreisförmigen Außenkante aus vorspringen, wobei die Achszapfen bei derjenigen Lamelle (2), die eine konvexe gekrümmte Innenkante hat, in Übereinstimmung mit den durch die Innenkante und durch die kreisförmige Außenkante und die Tangente zu der Rückseite der Lamelle (2) definierten Scheiteln positioniert sind, wohingegen bei derjenigen Lamelle (3), die eine konkave gekrümmte Innenkante hat, die Achszapfen an Zwischenpunkten der kreisförmigen Außenkante positioniert sind und von der Rückseite der Lamelle getrennt sind, gestützt durch zwei Pfosten (12), die von der Rückseite der Lamelle (3) aus vorspringen derart, dass die Drehachse (7) derjenigen Lamelle (3), die eine konkave gekrümmte Innenkante hat, in einem größeren Abstand von der Vorderseite des Rahmens positioniert ist als die Drehachse (6) der anderen Lamelle (2), und **dadurch gekennzeichnet, dass** die zwei Lamellen (2, 3) hinten mit Hilfe einer Verbindungsstange (14) verknüpft sind, die zwischen montierten Nasen (15, 16) montiert ist, die von der Rückseite der zwei Lamellen (2, 3) aus vorspringen.

2. Luftverteiler nach Anspruch 1, **dadurch gekennzeichnet, dass** die zwei Achszapfen, welche die Drehachse derjenigen Lamelle definieren, die eine konkave gekrümmte Innenkante hat, gegenüber dem benachbarten Scheitel der anderen Lamelle einen gewölbten Schnitt haben, wobei das konkave gekrümmte Profil zu dem Scheitel hin gerichtet ist.

3. Luftverteiler nach Anspruch 1, **dadurch gekennzeichnet, dass** die konkave gekrümmte Innenkante der entsprechenden Lamelle eine Stufe hat, in der die konvexe gekrümmte Innenkante der anderen Lamelle in der koplanaren geschlossenen Stellung der zwei Lamellen gekoppelt ist.

4. Luftverteiler nach Anspruch 1, **dadurch gekennzeichnet, dass** die Verbindungsstange, welche die zwei Lamellen hinten verknüpft, aus einem starren Stab besteht, der mit Hilfe von jeweiligen Achsen, parallel zu den Drehachsen der Lamellen mit dem kreisförmigen Rahmen, gelenkig mit den Nasen der Lamellen verbunden ist.

## Revendications

1. Diffuseur d'air pour des véhicules automobiles, comprenant un cadre circulaire (1) dans lequel au moins deux lamelles (2, 3) qui peuvent être positionnées entre une position fermée coplanaire et une position ouverte parallèle sont agencées, dans lequel les deux lamelles qui peuvent être positionnées possèdent des bords intérieurs opposés incurvés complémentaires, l'une possédant un contour incurvé convexe (4) et l'autre possédant un contour incurvé concave (5), et elles sont articulées sur le cadre selon des axes parallèles respectifs (6, 7) formés dans chaque lamelle (2, 3) par une paire de pivots (8) faisant saillie à partir du bord extérieur circulaire dans des points symétriques opposés, lesdits pivots étant situés dans la lamelle (2) possédant un bord intérieur incurvé convexe de façon coïncidente avec les sommets définis par ledit bord intérieur et par le bord extérieur circulaire et de façon tangente par rapport à la surface arrière de la lamelle (2), dans lequel, dans la lamelle (3) possédant un bord intérieur incurvé concave, les pivots sont situés à des points intermédiaires du bord extérieur circulaire et sont séparés de la surface arrière de la lamelle, supportés par deux montants (12) faisant saillie à partir de ladite surface arrière de la lamelle (3), de sorte que l'axe d'articulation (7) de la lamelle (3) possédant un bord intérieur incurvé concave soit situé à une distance plus importante du plan avant du cadre que l'axe d'articulation (6) de l'autre lamelle (2) ; et les deux lamelles (2, 3) sont reliées dans l'arrière au moyen d'une bielle (14) assemblée entre des oreilles assemblées (15, 16) faisant saillie à partir de l'arrière des deux lamelles (2, 3).

2. Diffuseur selon la revendication 1, **caractérisé en ce que** les deux pivots définissant l'axe d'articulation de la lamelle possédant un bord intérieur incurvé concave ont la section opposée au sommet adjacent de l'autre lamelle arquée, le profil incurvé concave étant tourné vers ledit sommet.

3. Diffuseur selon la revendication 1, **caractérisé en ce que** le bord intérieur incurvé concave de la lamelle correspondant comporte un épaulement dans lequel le bord intérieur incurvé convexe de l'autre lamelle est accouplé dans la position fermée coplanaire des deux lamelles.

4. Diffuseur selon la revendication 1, **caractérisé en ce que** la bielle reliant les deux lamelles dans l'arrière est constituée d'une barre rigide articulée sur les oreilles des lamelles au moyen d'axes respectifs parallèles aux axes d'articulation des lamelles avec le cadre circulaire.
